# EUROPÄISCHE PATENTANMELDUNG

(11) **EP 4 435 691 A1**
(43) Veröffentlichungstag der Anmeldung: **25.09.2024**
(21) Anmeldenummer: 24152302.6
(22) Anmeldetag: 17.01.2024
(51) Int. Cl.: G06Q 10/0631, G01B 21/00, G05B 19/401

(54) **VERFAHREN ZUR STEUERUNG EINER MESSVORRICHTUNG UND MESSVORRICHTUNG**

(30) Priorität: 21.03.2023 DE 102023107031; 21.03.2023 US 202363453485 P
(71) Anmelder: Netzsch Gerätebau GmbH, 95100 Selb (DE)
(72) Erfinder: BRUNNER, Martin, 95176 Konradsreuth (DE); DENNER, Thomas, 95100 Selb (DE); HILPERT, Thilo, 95100 Selb (DE); WOHLFAHRT, Fabian, 95111 Rehau (DE); SCHÖNEICH, Michael, 95100 Selb (DE); MÜLLER, Michael, 92724 Trabitz (DE); HACHMANN, Thorsten, 95199 Thierstein (DE)
(74) Vertreter: Isarpatent

(57) **Zusammenfassung**

Die vorliegende Erfindung betrifft ein Verfahren zur Steuerung einer Messvorrichtung (100), umfassend ein Empfangen einer Anfrage, eine bestimmte Messung durchzuführen, durch eine Steuereinrichtung (110; 200); ein Erstellen eines Messplans, welche Schritte für die bestimmte Messung durchgeführt werden sollen, durch die Steuereinrichtung (110; 200); und ein Ausgeben des erstellten Messplans an einen Benutzer der Messvorrichtung (100) durch die Steuereinrichtung (110; 200). Des Weiteren betrifft die vorliegende Erfindung eine Messvorrichtung (100)

## Beschreibung

### TECHNISCHES GEBIET DER ERFINDUNG

Die vorliegende Erfindung betrifft ein Verfahren zur Steuerung einer Messvorrichtung sowie eine Messvorrichtung.

### HINTERGRUND DER ERFINDUNG

Das Bestimmen von Eigenschaften verschiedener Materialien ist für viele Anwendungen in Forschung und Industrie von großer Bedeutung. Hierfür werden vielfältige Messvorrichtungen verwendet, welche je nach Anwendungsbereich mitunter sehr komplexe Messvorgänge ermöglichen.

Um diese Messungen durchzuführen ist von einem Benutzer eine gewisse Expertise gefordert, da die technischen und wissenschaftlichen Hintergründe der einzelnen Messvorgänge berücksichtigt werden müssen, um eine erfolgreiche Durchführung der gewünschten Messung sicherstellen zu können.

Dies führt unter anderem dazu, dass für das Durchführen einer Messung nicht nur die reine Messzeit benötigt wird, sondern auch eine mitunter lange Vorbereitungszeit, in welcher ein Benutzer einer zu verwendenden Messvorrichtung den Messablauf selbst planen und vorbereiten muss.

### ZUSAMMENFASSUNG DER ERFINDUNG

Vor diesem Hintergrund liegt der vorliegenden Erfindung die Aufgabe zugrunde, die Verwendung von Messvorrichtungen zu erleichtern und effizienter zu gestalten.

Diese Aufgabe wird gelöst durch ein Verfahren mit den Merkmalen des Patentanspruchs 1 sowie durch eine Messvorrichtung mit den Merkmalen des Patentanspruchs 10.

Dementsprechend ist ein Verfahren zur Steuerung einer Messvorrichtung vorgesehen. Das Verfahren umfasst ein Empfangen einer Anfrage, eine bestimmte Messung durchzuführen, durch eine Steuereinrichtung, ein Erstellen eines Messplans, welche Schritte für die bestimmte Messung durchgeführt werden sollen, durch die Steuereinrichtung, und ein Ausgeben des erstellten Messplans an einen Benutzer der Messvorrichtung durch die Steuereinrichtung.

Des Weiteren ist eine Messvorrichtung vorgesehen, welche dazu ausgebildet ist, das erfindungsgemäße Verfahren durchzuführen.

Eine der Erfindung zugrunde liegende Idee besteht in der Unterstützung des Benutzers der Messvorrichtung durch eine dafür ausgelegte Steuereinrichtung. Da die Steuereinrichtung die Erstellung des Messplans übernimmt, kann dieser Schritt der Messvorbereitung drastisch abgekürzt werden. Die Ausgabe des Messplans an den Benutzer, welche auch begleitend zum Messvorgang erfolgen kann, entlastet den Benutzer während der Durchführung der Messung zusätzlich.

Gemäß eines Ausführungsbeispiel des Verfahrens greift die Steuereinrichtung bei der Erstellung des Messplans auf eine Datenbank zurück. Durch geeignete Ausgestaltung der Datenbank kann die Erstellung eines geeigneten Messplans vorteilhaft unterstützt werden.

Gemäß einer Weiterbildung des Verfahrens beinhaltet die Datenbank eine Vielzahl an vorgefertigten Messplänen, aus welchen die Steuereinrichtung einen auswählt. Dies ist eine vorteilhaft einfache Ausgestaltung einer Datenbank, welche schnelle und zuverlässige Ergebnisse liefert.

Gemäß einer Weiterbildung des Verfahrens beinhaltet die Datenbank eine Vielzahl an Informationen über Materialeigenschaften und Messmethoden, wobei die Steuereinrichtung basierend auf dieser Vielzahl an Informationen autonom den Messplan erstellt. Hierdurch kann die Steuereinrichtung vorteilhaft eine Vielzahl von hypothetisch möglichen Messungen unterstützen.

Gemäß eines Ausführungsbeispiels des Verfahrens aktualisiert die Steuereinrichtung die Datenbank nach Durchführung der Messung. Hierdurch können bei einer Messung gewonnene Erkenntnisse vorteilhaft für zukünftige Messungen genutzt werden.

Gemäß eines Ausführungsbeispiels des Verfahrens umfasst der erstellte Messplan eine Vielzahl von Messschritten, welche einzeln an den Benutzer ausgegeben werden. Hierdurch wird der Benutzer bei der Durchführung der Messung vorteilhaft unterstützt, da nicht zu viel Information auf einmal ausgegeben wird.

Gemäß einer Weiterbildung des Verfahrens muss der Benutzer bestätigen, dass ein Messschritt durchgeführt wurde, bevor der der nachfolgende Messschritt ausgegeben wird. Hierdurch kann die Steuereinrichtung noch vorteilhafter bei der Durchführung der Messung unterstützen, da sichergestellt werden kann, dass jeder Messschritt korrekt ausgeführt wird.

Gemäß eines Ausführungsbeispiels des Verfahrens erfolgt das Ausgeben des erstellten Messplans durch eine Ausgabeeinrichtung der Messvorrichtung. Durch eine Fokussierung der Ausgabe auf einen bestimmten Bereich kann die Aufnahme der ausgegebenen Informationen durch den Benutzer vorteilhaft erleichtert werden.

Gemäß eines Ausführungsbeispiels des Verfahrens umfasst das Ausgeben des erstellten Messplans ein Hervorheben von mindestens einer Komponente, insbesondere einer Eingabeeinrichtung oder einer Probenaufnahmeeinrichtung, der Messvorrichtung. Hierdurch wird der Benutzer noch vorteilhafter unterstützt, da seine Aufmerksamkeit gezielt durch die Steuereinrichtung gelenkt wird.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: ein schematisches Flussdiagramm für ein Verfahren nach einem Ausführungsbeispiel der vorliegenden Erfindung;
- Fig. 2: eine schematische Darstellung einer Messvorrichtung nach einem Ausführungsbeispiel der vorliegenden Erfindung; und
- Fig. 3: eine schematische Darstellung eines Systems mit einer Vielzahl an Messvorrichtungen nach einem Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

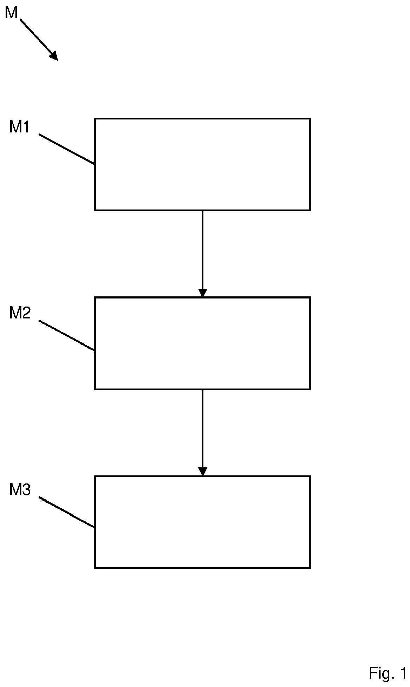

Fig. 1 zeigt ein schematisches Flussdiagramm für ein Verfahren M zum Steuern einer Messvorrichtung nach einem Ausführungsbeispiel der vorliegenden Erfindung.

In einem ersten Verfahrensschritt M1 empfängt eine Steuereinrichtung eine Anfrage, eine bestimmte Messung durchzuführen. In einem weiteren Verfahrensschritt M2 erstellt die Steuereinrichtung einen Messplans, welche Schritte für die bestimmte Messung durchgeführt werden sollen. In einem weiteren Verfahrensschritt M3 gibt die Steuereinrichtung den erstellten Messplan an einen Benutzer der Messvorrichtung aus.

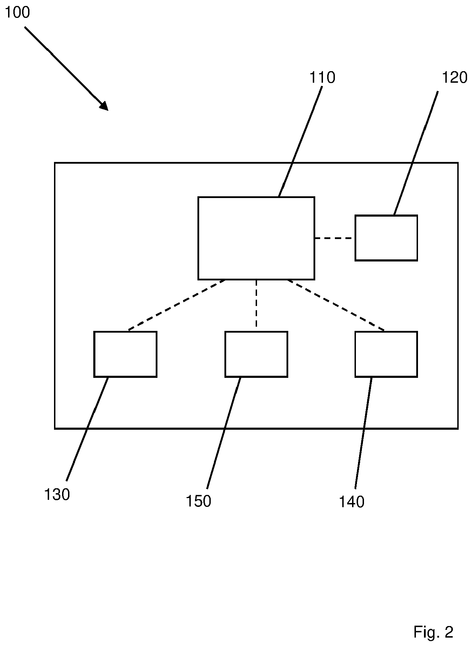

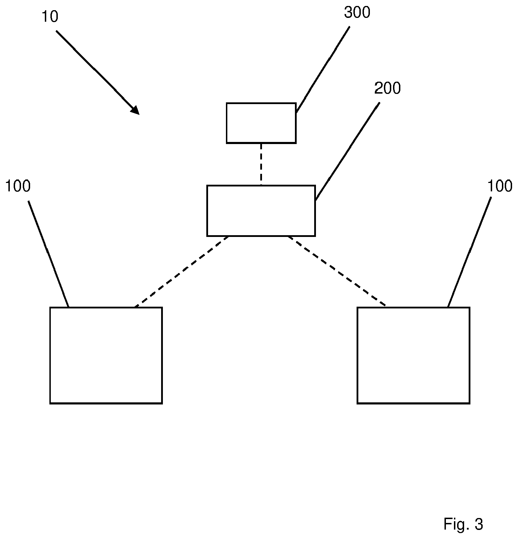

Das gezeigte Verfahren M wird im Nachfolgenden mit Bezug auf die Figuren 2 und 3 im Detail beschrieben.

Fig. 2 zeigt eine schematische Darstellung einer Messvorrichtung 100 nach einem Ausführungsbeispiel der vorliegenden Erfindung.

Die Messvorrichtung 100 weist eine Steuereinrichtung 110, eine Datenbank 120, eine Ausgabeeinrichtung 130, eine Eingabeeinrichtung 140, und eine Probenaufnahmeeinrichtung 150 auf.

Die Steuereinrichtung 110 ist in dem hier gezeigten Ausführungsbeispiel in die Messvorrichtung 100 integriert und dazu ausgebildet, eine Anfrage, eine bestimmte Messung durchzuführen, zu empfangen. Diese Anfrage kann von einem Benutzer der Messvorrichtung 100 beispielsweise über die Eingabeeinrichtung 140 der Messvorrichtung 100 an die Steuereinrichtung 110 übergeben werden. Die Eingabeeinrichtung 140 kann hierfür beispielsweise eine Tastatur, einen Touchscreen oder ähnliches umfassen. Alternativ kann die Anfrage auch über eine externe Schnittstelle an die Steuereinrichtung 110 übertragen werden.

Die Steuereinrichtung 110 ist weiterhin dazu ausgebildet, auf die empfangene Anfrage einen Messplan zu erstellen, welche Schritte für die bestimmte Messung durchgeführt werden sollen. Hierfür kann die Steuereinrichtung 110 auf die Datenbank 120 zurückgreifen, welche im vorliegenden Ausführungsbeispiel in Form eines internen Speichers der Messvorrichtung 100 ausgebildet ist. Die Datenbank 120 kann hierbei eine Vielzahl von vorgegebenen Messplänen beinhalten. In diesem Fall erstellt die Steuereinrichtung 110 den Messplan für die bestimmte Messung, indem einer der vorgegebenen Messpläne der Datenbank auswählt. Alternativ oder zusätzlich kann die Datenbank 120 eine Vielzahl an Informationen über Materialeigenschaften und Messmethoden beinhalten. In diesem Fall erstellt die Steuereinrichtung den Messplan autonom basierend auf dieser Vielzahl an Informationen.

Die Steuereinrichtung 110 ist weiterhin dazu ausgebildet, den erstellten Messplan an einen Benutzer der Messvorrichtung 100 auszugeben. Hierfür kann beispielsweise die Ausgabeeinrichtung 130 der Messvorrichtung 100 verwendet werden. Die Ausgabeeinrichtung 130 kann hierfür beispielsweise einen Bildschirm und/oder Lautsprecher umfassen. Beispielsweise können auch die Ausgabeeinrichtung 130 und die Eingabeeinrichtung 140 in einem Touchscreen zusammengefügt sein. Alternativ oder zusätzlich können auch einzelne Komponenten der Messvorrichtung 100, wie etwa die Eingabeeinrichtung 140 und die Probenaufnahmeeinrichtung 150 hervorgehoben werden, in dem etwa zu betätigende Knöpfe oder dergleichen beleuchtet werden.

Insbesondere kann die Steuereinrichtung 110 auch dazu ausgebildet sein, die Datenbank 120 nach der Durchführung der bestimmten Messung zu aktualisieren. Die Messergebnisse bezüglich der Materialeigenschaften der bei der Messung verwendeten Probe können dann zum Beispiel in die Datenbank 120 aufgenommen werden und stehen dann für zukünftige Messungen und Messpläne zur Verfügung. Auch vorgegebene Messpläne können überarbeitet werden, wobei die durchgeführte Messung berücksichtigt wird. Die hierfür nötigen Informationen bezüglich der Durchgeführten Messung können entweder von einem Benutzer der Messvorrichtung 100 an die Steuereinrichtung 110 übergeben werden. Alternativ oder zusätzlich kann die Steuereinrichtungen 110 die relevanten Informationen auch direkt von der Messvorrichtung 100, bzw. von in der Messvorrichtung 100 integrierten Sensoren, erhalten.

Eine Möglichkeit für die Ausgabe eines erstellten Messplans kann darin bestehen, den Messplan in eine Vielzahl an einzelnen Messschritten aufzuteilen, welche nacheinander an den Benutzer ausgegeben werden, wobei ein Messschritt erst ausgegeben wird, wenn der vorhergehende Schritt durchgeführt wurde. Alternativ oder zusätzlich kann die Steuereinrichtung 110 auch dazu ausgebildet sein, das Durchführen weiterer Schritte zu unterbinden, bis der Benutzer bestätigt hat, dass der aktuelle Messschritt durchgeführt wurde. Die Steuereinrichtung 110 kann die Durchführung der einzelnen Messschritte direkt überwachen, etwa mittels in die Messvorrichtung 100 integrierter Sensoren.

Die Messvorrichtung 100 kann insbesondere als Vorrichtung für die thermische Analyse von Materialien ausgebildet sein. Insbesondere kann die Messvorrichtung 100 für die Durchführung von Differenz-Thermoanalysen, dynamischer Differenzkalometrie, dynamisch-mechanischer Analysen, thermomechanischer Analysen oder dergleichen ausgebildet sein. Bei derartigen Messvorgängen kann die Unterstützung eines Benutzers durch die Steuereinrichtung 110 besonders vorteilhaft sein.

Fig. 3 zeigt eine schematische Darstellung eines Systems 10 mit einer Vielzahl an Messvorrichtungen 100 nach einem Ausführungsbeispiel der vorliegenden Erfindung.

Das System 10 umfasst im gezeigten Ausführungsbeispiel insgesamt zwei Messvorrichtungen 100, eine Steuereinrichtung 200 sowie eine Datenbank 300.

Die einzelnen Komponenten des Systems 10 können prinzipiell genauso ausgebildet sein, wie die mit Bezug auf Figur 2 beschriebenen entsprechenden Komponenten. Lediglich die Steuereinrichtung 200 und die Datenbank 300 sind in dem hier gezeigten Ausführungsbeispiel extern von den beiden Messvorrichtungen 100 als eigenständige Geräte ausgebildet. Prinzipiell kann die Datenbank 300 jedoch auch als Unterkomponente der Steuereinrichtung 200 ausgebildet sein.

Da die Steuereinrichtung 200 als eigenständige Vorrichtung ausgebildet ist, kann sie für die Verwendung mit jeder der beiden Messvorrichtungen 100 ausgebildet sein. Bei dieser Konfiguration kann Bestandteil des von der Steuereinrichtung 200 erstellten Messplans sein, welche der Messvorrichtungen 100 verwendet werden soll.

In Fig. 3 sind zwei Messvorrichtungen 100 gezeigt. Es sind allerdings beliebige Anzahlen an Messvorrichtungen 100 vorgesehen sein. Insbesondere kann auch vorgesehen sein, eine einzelne Messvorrichtung 100 mit einer externen Steuereinrichtung 200 und/oder einer externen Datenbank 300 zu verwenden.

Die Messvorrichtungen 100 können funktionsgleich ausgebildet sein oder für die Durchführung jeweils unterschiedlicher Messungen ausgebildet sein. Dies erlaubt je nach Anwendungsbereich die zeitgleiche oder sequentielle Durchführung der jeweiligen Messvorgänge.

Die Datenbank 300 wird hier als spezifischer Bestandteil des Systems 10 gezeigt. Es ist jedoch auch denkbar, dass die Steuereinrichtung 200 und/oder die Datenbank 300 mit einem erweiterten Netzwerk, insbesondere mit dem Internet, verbunden ist und relevante Informationen direkt über dieses Netzwerk bezieht anstatt sie lokal abzuspeichern.

### BEZUGSZEICHENLISTE

- 10: System
- 100: Messvorrichtung
- 110: Steuereinrichtung
- 120: Datenbank
- 130: Ausgabeeinrichtung
- 140: Eingabeeinrichtung
- 150: Probenaufnahmeeinrichtung
- 200: Steuereinrichtung
- 300: Datenbank
- M: Verfahren
- M1: Verfahrensschritt
- M2: Verfahrensschritt
- M3: Verfahrensschritt

## Patentansprüche

1. Verfahren (M) zur Steuerung einer Messvorrichtung (100), umfassend
- ein Empfangen (M1) einer Anfrage, eine bestimmte Messung durchzuführen, durch eine Steuereinrichtung (110; 200);
- ein Erstellen (M2) eines Messplans, welche Schritte für die bestimmte Messung durchgeführt werden sollen, durch die Steuereinrichtung (110; 200); und
- ein Ausgeben (M3) des erstellten Messplans an einen Benutzer der Messvorrichtung (100) durch die Steuereinrichtung (110; 200).

2. Verfahren (M) nach Anspruch 1, wobei die Steuereinrichtung (110; 200) bei der Erstellung des Messplans auf eine Datenbank (120; 300) zurückgreift.

3. Verfahren (M) nach Anspruch 2, wobei die Datenbank (120; 300) eine Vielzahl an vorgefertigten Messplänen beinhaltet, aus welchen die Steuereinrichtung (110; 200) einen auswählt.

4. Verfahren (M) nach Anspruch 2, wobei die Datenbank (120; 300) eine Vielzahl an Informationen über Materialeigenschaften und Messmethoden beinhaltet, und die Steuereinrichtung (110; 200) basierend auf dieser Vielzahl an Informationen autonom den Messplan erstellt.

5. Verfahren (M) nach einem der Ansprüche 2 bis 4, wobei die Steuereinrichtung (110; 200) die Datenbank (120; 300) nach Durchführung der Messung aktualisiert.

6. Verfahren (M) nach einem der vorhergehenden Ansprüche, wobei der erstellte Messplan eine Vielzahl von Messschritten umfasst, welche einzeln an den Benutzer ausgegeben werden.

7. Verfahren (M) nach Anspruch 6, wobei der Benutzer bestätigen muss, dass ein Messschritt durchgeführt wurde, bevor der nachfolgende Messschritt ausgegeben wird.

8. Verfahren (M) nach einem der vorhergehenden Ansprüche, wobei das Ausgeben des erstellten Messplans durch eine Ausgabeeinrichtung (130) der Messvorrichtung (100) erfolgt.

9. Verfahren (M) nach einem der vorhergehenden Ansprüche, wobei das Ausgeben des erstellten Messplans ein Hervorheben von mindestens einer Komponente, insbesondere einer Eingabeeinrichtung (140) oder einer Probenaufnahmeeinrichtung (150), der Messvorrichtung (100) beinhaltet.

10. Messvorrichtung (100), welche dazu ausgebildet ist, ein Verfahren (M) nach einem der Ansprüche 1 bis 9 durchzuführen.
